# EUROPÄISCHE PATENTSCHRIFT

(11) **EP 2 117 918 B1**
(45) Veröffentlichungstag und Bekanntmachung des Hinweises auf die Patenterteilung: **15.09.2010**
(21) Anmeldenummer: 07846363.5
(22) Anmeldetag: 21.11.2007
(51) Int. Cl.: B63B 21/66, B63G 8/42

(54) **VERFAHREN ZUR TIEFENFÜHRUNG EINES SCHLEPPFISCHES**
METHOD FOR THE DEPTH CONTROL OF A TOWFISH
PROCÉDÉ DE GUIDAGE EN PROFONDEUR D'UN POISSON REMORQUÉ

(30) Priorität: 13.01.2007 DE 102007002057
(43) Veröffentlichungstag der Anmeldung: 18.11.2009
(73) Patentinhaber: Christian-Albrechts-Universität zu Kiel, 24118 Kiel (DE)
(72) Erfinder: GÖTZE, Hans-Jürgen, 24220 Flintbek (DE); TIETZE, Gunnar, 24105 Kiel (DE); MÜLLER, Sabine, 18109 Rostock (DE)
(74) Vertreter: Biehl, Christian
(86) Internationale Anmeldenummer: PCT/DE2007/002113
(87) Internationale Veröffentlichungsnummer: WO 2008/083647

(56) Entgegenhaltungen:
- JP-A- 7 017 481
- JP-A- 8 332 995
- JP-A- 9 090 052
- US-A- 3 496 526

## Beschreibung

Die Erfindung betrifft ein Verfahren zur tiefengesteuerten Führung eines Schleppfisches.

JP9090052 offenbart ein Verfahren zur Tiefenführung eines den Untergrund eines Gewässers untersuchenden Schleppfisches mit einem Boot, einem vom dem Boot in einem bestimmten Abstand nachgeschleppten Schwimmkörper, und einem vom Schwimmkörper abhangenden Schleppfisch. Bei der Tiefenführung des Schleppfisches wird das ermittelte Profil des Untergrunds berücksichtigt. Darüber hinaus wird die Tiefe des Schleppfisches über ein erstes Seil, das über eine am Schwimmkörper angeordnete Umlenkrolle geführt wird, und ein zweites den Schleppfisch direkt mit dem Boot verbindendes Seil derart gesteuert, dass der Schleppfisch senkrecht unter dem Schwimmkörper schwimmt.

Es sind in der Geophysik eine Reihe von Verfahren bekannt, die eine indirekte Erkundung des Meeresbodens von der Meeresoberfläche aus ermöglichen. Dieses geschieht allgemein durch den Einsatz verschiedenster Sensoren, die üblicherweise zu einem Sensorarray zusammengeschaltet sind. Dieses Array wird in geeigneter Messanordnung über den zu untersuchenden Untergrund geführt; mittels der Sensorsignale sind Rückschlüsse auf Objekte oder geologische Verhältnisse im Untergrund möglich. Insbesondere eisenhaltige Objekte, die ferromagnetische Eigenschaften aufweisen, lassen sich durch deren Einfluss auf das Erdmagnetfeld orten, indem das Magnetfeld dieser Objekte erfasst wird. Dies ist in der Regel durch einen magnetischen Dipol darstellbar.

Für diese magnetischen Messungen, die mit einem Magnetometer vorgenommen werden, ist das Eigenmagnetfeld des Messbootes, auch wenn es durch moderne Entmagnetisierungsverfahren und -technologien stark geschwächt wurde, immer noch störend. Selbst wenn ein a-magnetisches Schiff z. B. gefertigt aus Aluminium, Kunststoff oder Holz als Messboot zum Einsatz kommt, bleiben immer magnetische Störeinflüsse durch Stromerzeuger oder Antriebsaggregate. Es ist daher üblich, das Sensorarray als Schleppfisch dem Messboot hinterher zu schleppen.

Da das magnetische Dipolfeld mit der 3. Potenz des Messabstandes abnimmt, sollte die Messung möglichst nahe am Objekt erfolgen. Es wird so eine hohe Auflösung erreicht, die auch die Ortung kleiner Objekte gewährleistet. Mit so angepassten Messanlagen lassen sich beim Stand der heutigen Sensortechnik unter der Annahme durchschnittlicher magnetischer Suszeptibilität 1 kg Eisen aus ca. 5 m, 10 kg Eisen auf ca. 10 m und 100 kg Eisen auf ca. 12 m vor dem Hintergrundrauschen detektieren. An Hand der wenigen Zahlenbeispiele wird deutlich, dass es sinnvoll ist, das Sensorarray möglicht dicht und in einem definierten Abstand über dem zu vermessenden Meeresgrund zu führen.

Es ist also anzustreben, für den Schleppfisch eine Tiefensteuerung zu benutzen, die das Sensorarray mit gleichbleibend geringem Abstand über den Meeresgrund zu führen.

Es ist bekannt, die jeweils aktuelle Wassertiefe durch ein Bodenabstandssonar bzw. durch ein Echolot ermittelt. Die entsprechende Tiefensteuerung erfolgt dabei entweder durch Veränderung des Auftriebes oder über gesteuerte Flossen als Tiefenruder. Beide Verfahren sind mit einer Trägheit behaftet, die eine Vorhaltezeit bei der Regelung erforderlich machen, sodass bei Anwachsenden Unebenheiten auf dem Meeresgrund Messabschnitte entstehen, deren Auflösung reduziert ist. Des Weiteren beeinflussen aktive Steuerungssysteme des Schleppfischs, z. B. kleine Antriebsaggregate, den gewünschten Messerfolg negativ, da sie ihrerseits ein eigenes Magnetfeld erzeugen.

Aufgabe der Erfindung ist es, eine Vorrichtung bereitzustellen, die es ermöglicht, den Schleppfisch einerseits dicht über dem Meeresgrund zu führen und andererseits die Vorhaltezeit für Ausweichmanöver des Schleppfisches bei Meeresgrundunebenheiten stark zu verringern, wobei der Schleppfisch frei von Aggregaten ist, die das Magnetfeld beeinflussen.

Die Aufgabe wird mit der Vorrichtung nach den Merkmalern des Patentanspruchs 1 gelöst. Vorteilhafte Ausgestaltungen ergeben sich aus dem abhängigen Anspruch.

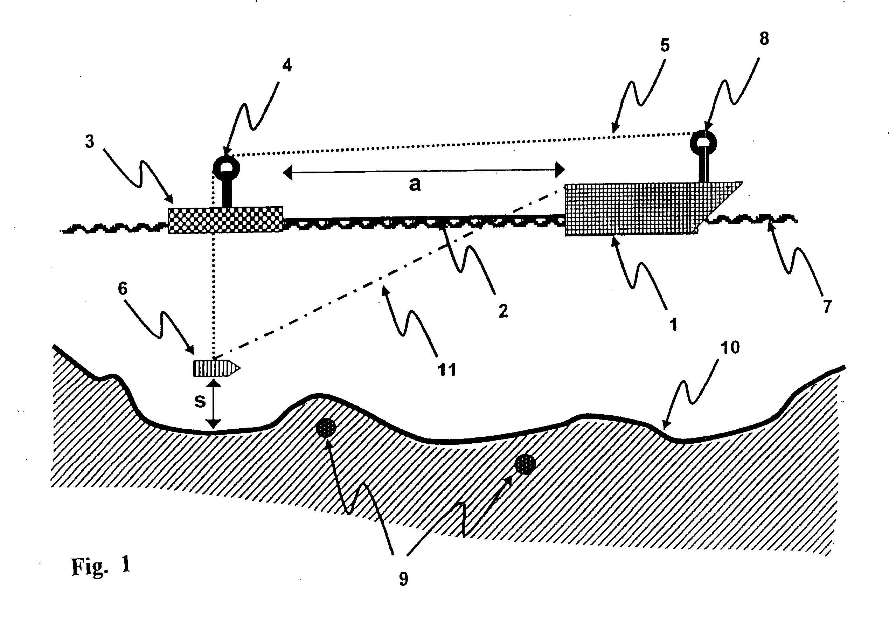

Die Erfindung wird im Folgenden unter Bezug der beigefügten Zeichnung erläutert, die das Messboot mit Schwimmkörper und Schleppfisch zeigt.

In einem genügend großen Abstand a vom Messboot 1 wird mittels eines schwimmfähigem Distanzgestänges 2, das auf der Oberfläche des Meeres aufschwimmt, ein unmagnetischer Schwimmkörper 3 hinterher geschleppt. Der Schwimmkörper 3, ist mit einer Umlenkrolle 4 versehen ist, über die ein Seil 5 läuft, an dessen einen Ende der mit Ballast beschwerte Schleppfisch 6 befestigt ist. Das andere Ende des Seils 5, das über dem Meeresspiegel 7 verläuft, wird über eine Seilwinde 8, die sich auf dem Messboot 1 befindet, auf ein Antriebsaggregat geleitet, dem ein Signal zugeführt wird, das zuvor aus der Tiefe am jeweiligen Ort des Schwimmkörpers 3 von einem Bodenabstandssonar in dem Messboot 1 berechnet worden ist. Der mit Ballastgewichten versehene Schleppfisch 6 wird so unmittelbar vor Meeresgrundunebenheiten und -hindernissen 9 in seiner Höhe so verstellt, das möglichst ein stets gleicher Messabstand s zum Meeresgrund 10 besteht. Das zweite Seil 11 wird dabei so weit ein- bzw. ausgefahren, dass der Schleppfisch 6 senkrecht unter dem Schwimmkörper schwimmt, also nicht unter dem Schwimmkörper pendelt.

Der Schleppfisch 6 mit den Magnetometern hängt also beschwert mit Ballastgewichten am Seil 5 über dem Meeresgrund 10 im konstant gehaltenen Abstand s und wird bei Messfahrten, die ausschließlich in Vorwärtsfahrt ausgeführt werden, durch ein Abspannseil 11 in seiner Senkrechtposition gehalten.

Das vorgeschlagene Verfahren erlaubt ein sehr dichtes Führen des Schleppfisches über den Meeresboden ohne die Gefahr einer Kollision mit Hindernissen oder dem Schleifen über den Boden.

### Bezugszeichenliste:

- 1:: Messboot
- 2:: Distanzgestänge
- 3:: Schwimmkörper
- 4:: Umlenkrolle
- 5:: Seil
- 6:: Schleppfisch
- 7:: Meeresspiegel
- 8:: Seilwinde
- 9:: Meeresgrundunebenheiten
- 10:: Meeresgrund
- 11:: Abspannseil
- s:: Messabstand
- a:: Schleppabstand

## Patentansprüche

1. Verfahren zur Tiefenführung eines den Untergrund (10) eines Gewässers untersuchenden Schleppfisches (6) mit
- einem Messboot (1),
- einem vom Messboot (1) in einem bestimmten Abstand nachgeschleppten a-magnetischen Schwimmkörper (3), und
- einem vom Schwimmkörper (3) abhängenden Schleppfisch (6),
wobei bei der Tiefenführung des Schleppfisches (6) das von dem Messboot (3) ermittelte Profil des Untergrunds (10) berücksichtigt wird, und wobei
die Tiefe des Schleppfisches (6) über ein den Schleppfisch (6) mit dem Messboot (1) verbindendes erstes Seil (5), das über eine am Schwimmkörper (3) angeordnete Umlenkrolle (4) geführt wird, und ein zweites den Schleppfisch (6) direkt mit dem Messboot (1) verbindendes Seil (11) derart gesteuert wird, dass der Schleppfisch (6) senkrecht unter dem Schwimmkörper (3) schwimmt.

2. Verfahren nach Anspruch 1, **dadurch gekennzeichnet, dass** der Abstand zwischen dem Messboot (1) und dem Schwimmkörper (3) über ein Distanzgestänge (2) definiert wird.

## Claims

1. A method for the depth control of a towfish (6) examining the bottom (10) of a body of water, having
- a measuring boat (1),
- a magnetic floating body (3), which is towed by the measuring boat (1) at a certain distance, and
- a towfish (6) depending from the floating body (3),
wherein the profile of the bottom (10) determined by the measuring boat (3) is taken into consideration in the depth control of the towfish (6), and wherein the depth of the towfish (6) is controlled via a first rope (5) connecting the towfish (6) to the measuring boat (1), the rope being guided via a pulley (4) arranged on the floating body (3), and a second rope (11) connecting the towfish (6) directly to the measuring boat (1) such that the towfish (6) floats perpendicularly beneath the floating body (3).

2. The method according to Claim 1, **characterized in that** the distance between the measuring boat (1) and the floating body (3) is defined via a distance linkage (2).

## Revendications

1. Procédé de guidage en profondeur (6) examinant un fond aquatique (10), avec:
- un bateau de mesure (1),
- un flotteur amagnétique (3) traîné par le bateau de mesure (1) à une distance définie et
- un poisson remorqué (6) pendant à partir du flotteur (3);
dans le cas du guidage en profondeur du poisson remorqué (6), le profil du fond (10) déterminé par le bateau de mesure (1) est pris en compte et de plus, un premier câble (5) reliant le poisson remorqué (6) au bateau de mesure (1) et passant par une poulie de renvoi (4) disposée sur le flotteur (3) ainsi qu'un second câble (11) reliant directement le poisson remorqué (6) au bateau de mesure (1) permettent de commander la profondeur du poisson remorqué (6), de sorte que celui-ci se déplace à la verticale en dessous du flotteur (3).

2. Procédé selon la revendication 1, dans lequel la distance entre le bateau de mesure (1) et le flotteur (3) est définie par le biais d'une barre de distance (2).
